# EUROPÄISCHE PATENTSCHRIFT

(11) **EP 2 985 804 B1**
(45) Veröffentlichungstag und Bekanntmachung des Hinweises auf die Patenterteilung: **02.11.2016**
(21) Anmeldenummer: 15178527.6
(22) Anmeldetag: 27.07.2015
(51) Int. Cl.: H01M 2/02, H01M 10/6555

(54) **BATTERIEGEHÄUSE**
BATTERY CASING
BOITIER DE BATTERIE

(30) Priorität: 14.08.2014 DE 102014111645
(43) Veröffentlichungstag der Anmeldung: 17.02.2016
(73) Patentinhaber: König Metall GmbH & Co. KG, 76571 Gaggenau (DE); Kerspe, Jobst H., 69256 Mauer (DE)
(72) Erfinder: Kerspe, Jobst H., 69256 Mauer (DE); Fischer, Michael, 76571 Gaggenau (DE)
(74) Vertreter: Geitz Truckenmüller Lucht

(56) Entgegenhaltungen:
- EP-A1- 0 588 004
- DE-A1- 10 319 350
- FR-A1- 2 474 195
- US-A- 3 110 633

## Beschreibung

Die Erfindung betrifft ein Batteriegehäuse.

Die Anforderungen an Batteriegehäuse sind einigermaßen umfangreich. Im Falle von mobilen Anwendungen, also etwa im Automotivbereich, müssen die in dem Gehäuse aufgehobenen Batteriezellen bzw. -module mechanisch geschützt sein, zum einen gegen die Rüttelbeanspruchung im gewöhnlichen Fahrbetrieb, wie aber auch im Falle einer Beschädigung des Fahrzeuges und damit gegebenenfalls auch des Batteriegehäuses im Falle eines Unfalles. In vielen Ländern wird darüber hinaus eine vollständige Kapselung der Zellen einer Batterie verlangt, um im Schadensfall ein Austreten der Batterieflüssigkeiten oder von Reaktionsprodukten bzw. die Bildung von Reaktionsprodukten zu verhindern. Letztlich dient die Kapselung auch dem insbesondere im Fahrzeugbereich relevanten Brandschutz.

Insbesondere in Zusammenhang mit der zunehmenden Elektromobilität werden zusätzliche Ansprüche an derartige Batteriegehäuse gestellt, um die Lebensdauer, aber auch die Leistungsfähigkeit der eingesetzten Batterien zu verbessern. Schon heute muss sichergestellt sein, dass die in dem Batteriegehäuse aufgenommenen Batteriezellen nicht so weit auskühlen, dass die in der Batterie ablaufenden elektrochemischen Prozesse einfrieren. Darüber hinaus muss das Batteriegehäuse aber auch sicherstellen, dass möglicherweise auftretende, überschüssige Wärme, etwa während der Durchführung eines Schnell-Ladeprozesses der Batterie oder im Falle einer verstärkten Leistungsentnahme aus der Batterie, zuverlässig abgeführt wird. Zusammengefasst bedeutet dies, dass innerhalb eines den heutigen Ansprüchen genügenden Batteriegehäuses die Temperatur in einem mittleren zulässigen Bereich gehalten werden muss, also eine definierte untere Temperaturschwelle, aber auch eine definierte obere Temperaturschwelle innerhalb des Batteriegehäuses nicht unter- bzw. überschritten werden darf. Es wird daher in Zukunft erforderlich sein, intelligente Batteriegehäuse mit einem intelligenten Thermomanagement zu versehen.

Aus dem Stand der Technik ist es bekannt, einzelne Batteriezellen zu Gruppen zusammenzuschalten und in Modulen zusammenzufassen. Diese Module sind meist mit einer einfachen thermischen Isolierung versehen, wobei es sich zumeist um vorgeformte Polystyrolgehäuse handelt. Zur Wärmeabfuhr können in diese Gehäuse Kühlflächen zwischen den einzelnen Zellen integriert sein, die mit Kühlwasser durchströmt werden. In der Regel werden im Automotivbereich mehrere derartige Module zu einer Gesamtbatterie zusammengeschaltet. Diese Gesamtbatterie wird dann oftmals in ein trogförmiges Batteriegehäuse eingebaut, das zum einen die Fixierung der Gesamtbatterie im Fahrzeug sicherstellen soll und zum anderen die notwendige Crash-Sicherheit leisten soll.

Hierzu ist aus der DE 40 13 269 A1 ein Batteriegehäuse zur Aufnahme eines Batteriemoduls eines Fahrzeuges vorbekannt, wobei dieses Batteriegehäuse als steifes Strukturelement ausgebildet ist und die Wandungselemente des Batteriegehäuses jeweils doppelwandig, d.h. in einer Sandwich-Bauweise mit einer Innen- und einer davon beabstandet angeordneten Außenwand, ausgebildet sind. Der Zwischenraum zwischen den Innen- und Außenwänden ist bei dieser Ausführung jeweils mit einem porösen Isolationsmaterial ausgefüllt und anschließend evakuiert. Es ist allerdings zweifelhaft, ob dieses poröse Isolationsmaterial druckfest ausgebildet ist und demnach das vorbekannte Batteriegehäuse auch über die erforderliche Crash-Sicherheit verfügt. Im übrigen ist die mittels Latent-Wärmespeichern realisierte Kühlung der die Batterie bildenden Speicherzellen nicht in der Wandung des Batteriegehäuses realisiert. Vielmehr sind die zur Kühlung eingesetzten Latent-Wärmespeicher in den Zwischenräumen zwischen den Speicherzellen angeordnet.

Aus der EP 0 588 004 A1 ist ein weiteres Batteriegehäuse zur Aufnahme eines Batteriemoduls eines Fahrzeuges bekannt. Dabei ist das Batteriegehäuse als steifes Strukturelement ausgebildet. Die Wandungselemente des Batteriegehäuses sind jeweils doppelwandig, d.h. ebenfalls in einer Sandwich-Bauweise mit einer Innen- und einer davon beabstandet angeordneten Außenwand, ausgebildet. Der Zwischenraum zwischen diesen Innen- und Außenwänden ist mit einem porösen Stützmaterial ausgebildet. Die zur Kühlung eingesetzten Kühlelemente sind ebenfalls in diesem Zwischenraum angeordnet. Allerdings handelt es sich hier um ein irreversibel mit der in dem Gehäuse angeordneten Batteriezelle verbundenes Gehäuse, das im Schichtaufbau, umfassend von außen nach innen eine Isolier-, eine Wärmespeicher- und eine Kühlungsschicht hergestellt ist.

In diesem Zusammenhang ist auch aus der DE 103 19 350 B4 ein Batteriekastenmodul für ein Fahrzeug, insbesondere für ein Kraftfahrzeug, vorbekannt. Es handelt sich dabei um einen mechanisch robusten Kasten zur Aufnahme einer Fahrzeugbatterie und einen den Kasten schließenden und vom Kasten lösbaren Deckel, wobei der Kasten eine wannenartige Doppelwandkonstruktion mit einer schaltbaren Vakuumdämmung aufweist, die in einen thermischen Durchgangszustand und einen thermischen Isolationszustand schaltbar ist, wobei das Modul zusätzlich eine elektrische Steuerung umfasst, die für das Schalten der Vakuumdämmung zuständig ist.

Die wannenartige Konstruktion des Batteriekastenmoduls soll dazu beitragen, dass zumindest geringe Mengen auslaufender Batteriesäure aufgefangen werden können.

Unter einer schaltbaren Vakuumdämmung ist zu verstehen, dass, wenn sich die Vakuumdämmung in einem ungeschalteten bzw. stromlosen Zustand befindet, der Isolationszustand des Batteriegehäuses aufrechterhalten wird, also eine Wärmeisolation der Batterie gegeben ist. Zusätzlich kann aber die Vakuumdämmung in Abhängigkeit von der Batterietemperatur und/oder der Umgebungstemperatur und/oder der Stromstärke oder sonstigen externen Anforderungen geschaltet werden und hierdurch in einen thermischen Durchgangszustand versetzt werden. Hierzu ist in der Doppelwandung des Batteriekastens ein aktivierbares Material angeordnet, worunter zu verstehen ist, dass in der Doppelwandung des vorbekannten Batteriekastenmoduls ein Wärmedämmmaterial, z.B. getempertes Glasfaserboard, eingebracht ist und im Weiteren der Innenraum evakuiert wird, um hierdurch eine niedrige Wärmeleitfähigkeit herzustellen. Zusätzlich ist ein Metallhydridgetter in das Innere dieser Dämmung integriert. Dieser Getter ist in der Lage, Wasserstoff bei Temperaturen unter ca. 100°C zu speichern. Bei Aufheizen des Getters kann somit in der Wärmedämmung eine Wasserstoff-Atmosphäre erzeugt werden. Dies führt in Verbindung mit dem Glasfaserboard zu einem signifikanten Anstieg der Wärmeleitfähigkeit. Dieser Zustand wird dann als Durchgangszustand der Wärmedämmung bezeichnet.

Ausgehend von diesem Stand der Technik wird im Rahmen der Erfindung der Einsatz eines multifunktionalen Batteriegehäuses vorgeschlagen, das gegenüber dem Stand der Technik konstruktiv verbessert ist und insbesondere ein verbessertes Thermomanagement für die in dem Batteriegehäuse aufgenommenen Batteriemodule ermöglicht.

Hierzu schlägt die Erfindung ein Batteriegehäuse vor, in dem ein oder mehrere miteinander verschaltete Batteriemodule aufgenommen werden können, so dass das separate Housing der einzelnen Batteriemodule entfallen kann. Das Batteriegehäuse selbst ist als hochfestes und steifes Strukturelement ausgebildet, so dass insoweit die insbesondere im Automotivbereich erforderliche Crash-Sicherheit sowie der erforderliche Auslaufschutz gegeben sind. Auf eine voluminöse Dämmung jedes einzelnen Batteriemoduls kann dabei verzichtet werden. Aufgrund der hohen Steifigkeit des Gehäuses kann die Fixierung der einzelnen Batteriemodule innerhalb des Gehäuses kompakt und zentral ausgeführt werden. Etwa auftretende Beschleunigungs- und Gewichtskräfte werden auf der Innenseite in die Gehäusestruktur eingeleitet und ohne zusätzliche Stütz- oder Tragelemente über die Wände auf die Befestigungspunkte im Fahrzeug übertragen. Im Übrigen sind im Unterschied zum Stand der Technik in die Wandungselemente des Batteriegehäuses zusätzlich Kühlelemente integriert, so dass erforderlichenfalls auch eine Ableitung überschüssiger Wärme durch das Batteriekastengehäuse ermöglicht ist bzw. unterstützt wird.

Dabei ist das Batteriegehäuse reversibel vollständig gekapselt t, also etwa im Wartungsfall an einer Seite des Gehäuses gegebenenfalls geöffnet und anschließend wieder verschlossen werden kann, um dann erneut evakuiert zu werden, um die Vakuumdämmung wiederherzustellen. Hierzu ist das Batteriegehäuse im Bereich des zu öffnenden Wandungselementes über zwei hintereinander angeordnete Flansche, nämlich einen für die Innen- und einen für die Außenwand, abgedichtet.

Alternativ hierzu kann die Innen- und Außenwand des Batteriegehäuses auch über Bördelelemente miteinander verbunden sein, wobei die Bördel so ausgebildet sind, dass dieser Verbindungsbereich mehrfach auftrennbar und wieder verschließbar ist. Die nach dem Öffnen und erneuten Verschließen des Batteriegehäuses jeweils erforderliche Evakuierung erfolgt über einen in die Außenwand des Batteriegehäuses integrierten Vakuumport in Verbindung mit einem geeigneten Schleusensystem. Auch hierdurch kann das Batteriegehäuse bedarfsweise geöffnet werden, etwa um fehlerhafte Batteriemodule zu entnehmen und auszutauschen.

In konkreter Ausgestaltung sind die Kühlelemente, etwa Kühlkanäle, in die Innenwand des Batteriegehäuses integriert oder zumindest in einem der Innenwand benachbarten Bereich in dem Zwischenraum zwischen den Wandungselementen angeordnet. Hierdurch ist sichergestellt, dass der Kühleffekt durch Anordnung der Kühlelemente in unmittelbarer Nähe der in dem Gehäuse aufgenommenen Batteriemodule gesteigert ist.

In weiterer Ausgestaltung sind die Kühlelemente mit einem übergeordneten Kühlsystem etwa eines Fahrzeuges verbunden, wobei zur Aufrechterhaltung der Vakuumisolierung des Batteriegehäuses die Anschlüsse vakuumdicht in das Batteriegehäuse hineingeführt sind. Dies hat zum einen den Vorteil, dass nicht eigens für das Batteriegehäuse ein zusätzliches Kühlsystem bereitgestellt werden muss und lässt darüber hinaus eine zentrale Steuerung der Kühlung des Batteriegehäuses, etwa in Abhängigkeit von den jeweiligen Fahrzeugeigenschaften, zu. So kann beispielsweise die Kühlung des Batteriegehäuses dann zugeschaltet werden, wenn aufgrund der Motorleistung oder auch des aktuellen Energiebedarfs des Fahrzeuges eine höhere Temperatur der in dem Gehäuse aufgenommenen Batteriemodule zu erwarten ist.

Das doppelwandige Batteriegehäuse ist in dem Zwischenraum zwischen den jeweiligen Innen- und Außenwänden mit einem porösen Stützmaterial gefüllt, in das ein Hybridspeichermaterial oder ein Getter integriert ist. Im Falle einer extremen Beanspruchung der in dem Batteriegehäuse aufgenommenen Batterien wird ein großer Teil der Abwärme über die gesamte Gehäuseoberfläche abgeführt. Bei Überschreiten eines definierten Temperaturniveaus oder auch im Falle einer Beheizung des integrierten Hybridspeichermaterials oder des Getters wird Wasserstoff oder ein anderes geeignetes Gas in das Stützmaterial emittiert und hierdurch die Wärmeleitfähigkeit des Stützmaterials signifikant erhöht, so dass in diesem Falle eine Wärmeableitung durch das Batteriegehäuse im Interesse der Kühlung der in dem Gehäuse aufgenommenen Batteriemodule ermöglicht wird. Bei entsprechender Auslegung kann hierdurch ein passives System der Wärmeableitung realisiert werden, indem selbsttätig bei Erreichen eines definierten Temperaturniveaus die gestützte Vakuumisolierung (GVI) innerhalb der Zwischenräume des doppelwandigen Batteriegehäuses in einen thermischen Durchgangszustand versetzt wird.

In abermals vorteilhafter Weiterbildung können zusätzlich in den Zwischenraum des Batteriegehäuses, also in das poröse Stützmaterial, Latent-Wärmespeicherelemente integriert sein oder zusätzlich bzw. alternativ Latent-Wärmespeicherelemente, dann vorzugsweise als mikrogekapselte Elemente, in die Kühlflüssigkeit der Kühlelemente integriert sein. Hierdurch kann etwa überschüssige Wärme zunächst an die besagten Wärmespeicher abgegeben werden, ohne dass hierzu eine aktive Kühlung benötigt wird, und umgekehrt bei niedrigen Umgebungstemperaturen kann überschüssige Wärme zur Beheizung der Batterie, aber gegebenenfalls auch eines Fahrzeuginnenraums, genutzt werden. Für den Fall, dass die Latent-Wärmespeicherelemente direkt in die Kühlflüssigkeit integriert werden, ist hierfür noch nicht einmal ein zusätzliches Bauteil innerhalb des Batteriegehäuses erforderlich.

In konkreter Ausgestaltung sind die Wärmespeicherelemente mit einem Phasenwechselmaterial gefüllt, so genanntem *"Phase-Change-Material"* (PCM), also Materialien, die in Abhängigkeit von der Umgebungstemperatur zunächst Wärme aufnehmen und bei einem Sinken der Umgebungstemperatur unter ein definiertes Temperaturniveau diese Wärme wieder abgeben. Auch hier handelt es sich somit um ein passives System, das in Abhängigkeit von der Umgebungstemperatur Wärme aufnimmt bzw. abgibt und daher sowohl zur Kühlung als auch zur Beheizung der in das Batteriegehäuse integrierten Batteriemodule eingesetzt werden kann.

In vorteilhafter Weiterbildung wird das erfindungsgemäße Batteriegehäuse zusätzlich mit einer Steuerung und/oder Regelung zur Realisierung eines Thermomanagements hinsichtlich der Innentemperatur des Gehäuses versehen. Hierdurch kann beispielsweise sichergestellt werden, dass während der Wärmeabgabe aus den Latent-Wärmespeichern zur Beheizung der in dem Batteriegehäuse aufgenommenen Batteriemodule gleichzeitig die Kühlung der in das Gehäuse integrierten Kühlelemente abgeschaltet ist.

In weiterer Ausgestaltung kann mittels der vorstehend beschriebenen Steuerung und/oder Regelung auch eine gezielte Erwärmung des in dem Zwischenraum aufgenommenen Stützmaterials oder des in dieses Stützmaterial integrierten Hybridspeichermaterials bzw. eines integrierten Getters erfolgen und hierdurch die Vakuumdämmung des Gehäuses auf Durchgang geschaltet werden bzw. durch Abschaltung der Erwärmung wieder aktiviert werden.

In weiterer Ausgestaltung des Thermomanagements kann die integrierte Steuerung und/oder Regelung mit einer Sensorik zur Erfassung der jeweiligen Fahrzeugzustände eines Fahrzeugs versehen sein, also insbesondere der aktuellen Motorleistung und/oder des aktuellen Energiebedarfs des Fahrzeugs bzw. einer Erfassung der Innentemperatur des Batteriegehäuses, und somit die Innentemperatur des erfindungsgemäßen Batteriegehäuses in Abhängigkeit vom aktuellen Batterie- und/oder Fahrzeugzustand gesteuert bzw. geregelt werden.

Dabei kann das Batteriegehäuse gemäß einer bevorzugten Ausgestaltung vollständig gekapselt ausgebildet sein.

In abermals alternativer Ausgestaltung kann das Batteriegehäuse auch zweiteilig ausgebildet sein, d.h. in Form von zwei separaten Halbschalen, die im Bereich ihrer Stoßkanten miteinander kraftschlüssig verbunden werden. Dabei erfolgt die Ausbildung der Verbindung zwischen den Stoßkanten der an der Verbindung beteiligten Halbschalen idealerweise unter Zwischenlage eines Dichtungselementes, um auch in diesem Bereich die Wärmedämmung des Batteriegehäuses aufrechtzuerhalten.

In vorteilhafter Weiterbildung dieses Gedankens des modulweise realisierten Aufbaus eines geschlossenen Batteriegehäuses aus mehreren Halbschalen können auch mehrere zylinderförmige Halbschalen wie oben beschrieben miteinander verbunden werden, wobei lediglich an den beiden Außenseiten des Batteriegehäuses nur einseitig geöffnete Halbschalen angeschlossen werden, so dass insgesamt wiederum ein vollständig geschlossenes Batteriegehäuse ausgebildet ist, wobei die einzelnen Halbschalen durch geeignete Verbindungselemente kraftschlüssig miteinander verbunden werden.

Im Falle derart modulweise aufgebauter Batteriegehäuse sind im Bereich der Stoßkanten der miteinander zu verbindenden Halbschalen vorteilhafterweise entsprechende Steckkupplungen vorgesehen, um die Halbschalen beispielsweise an eine gemeinsame Kühlmittelversorgung, elektrische Zuleitungen für integrierte Heizelemente usw. anzuschließen.

Dabei können auch die einzelnen Halbschalen über einen integrierten Vakuumport in Verbindung mit einem geeigneten Schleusensystem bedarfsweise geöffnet und anschließend nach einer erneuten Evakuierung wieder geschlossen werden, etwa um auf diese Weise Wartungsarbeiten auszuführen.

Im Weiteren sind alle etwa erforderlichen elektrischen Zuleitungen, Heizungsleitungen, Messleitungen oder Leitungen für die Kühlflüssigkeitszufuhr mittels dünnwandiger Rohre oder Wellbälge vakuumdicht mit der Innen- und Außenwand des Batteriegehäuses verbunden.

Die Erfindung wird nachstehend anhand einiger in der Zeichnung dargestellter Ausführungsbeispiele näher erläutert.

Es zeigen:
- Fig. 1:: ein allseits geschlossenes, doppelwandiges Batteriegehäuse in einer perspektivischen Prinzipskizze,
- Fig. 2:: einen in Figur 1 mit II bezeichneten Längsschnitt durch das in Figur 1 gezeigte Gehäuse,
- Fig. 3:: ein in Figur 2 mit III bezeichnetes Detail des in Figur 2 dargestellten Batteriegehäuses in einem Längsschnitt,
- Fig. 4:: ein in Figur 2 mit IV bezeichnetes Detail des in Figur 2 dargestellten Batteriegehäuses in einem Längsschnitt,
- Fig. 5:: ein mit einer zu öffnenden Wand versehenes Batteriegehäuse in einem Längsschnitt, sowie
- Fig. 6:: ein in Figur 5 mit VI bezeichnetes Detail des Batteriegehäuses in einem Längsschnitt und
- Fig. 7:: ein aus zwei Halbschalen aufgebautes Batteriegehäuse im Längsschnitt.

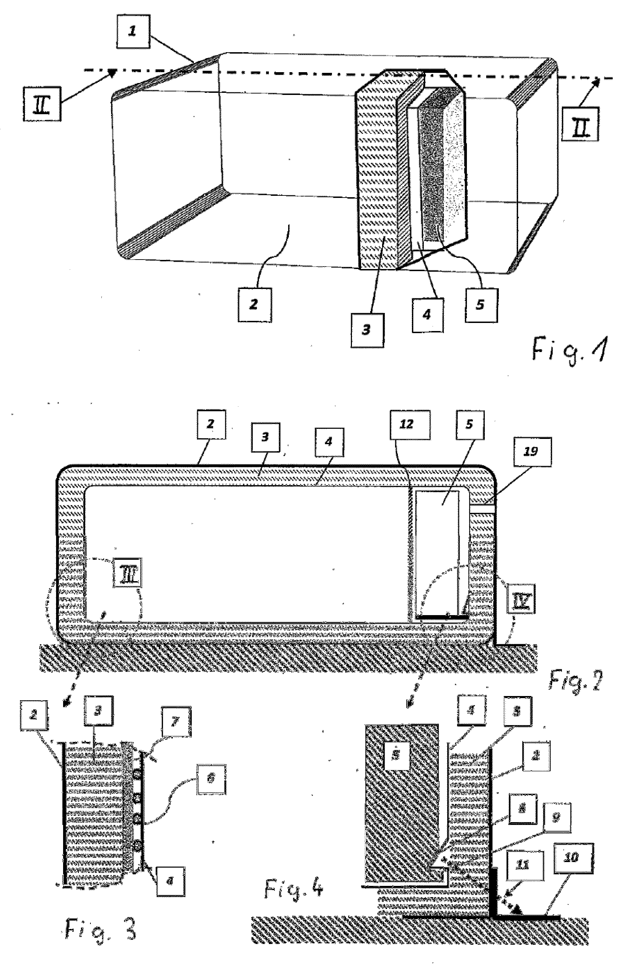

Figur 1 zeigt ein Batteriegehäuse 1 zur Aufnahme eines oder mehrerer miteinander verschalteter, aber in der Zeichnung nicht weiter dargestellter Batteriemodule. Das Batteriegehäuse 1 ist allseits von einer geschlossenen Außenwand 2 umgeben, wobei die Wand des Batteriegehäuses 1 gemäß der in die Zeichnung integrierten Schnittansicht doppelwandig derart aufgebaut ist, dass sich inwändig an die Außenwand 2 ein poröses Stützmaterial 3 zum Aufbau einer so genannten gestützten Vakuumisolierung (kurz: GVI) anschließt, die dann gegenüber dem Innenraum des Batteriegehäuses 1 von einer Innenwand 4 abgeschlossen ist.

Als poröses Stützmaterial 3 zur Ausfüllung des Zwischenraumes zwischen der Außenwand 2 und der Innenwand 4 kommt etwa ein Faserboard, hergestellt aus durch Thermokompression verdichteten Glasfasern, in Betracht oder schüttfähige Füllstoffe, wie etwa Mikro-Hohlglaskugeln, oder ein offenzelliges Schaumglasgranulat. Zusätzlich wird der Zwischenraum im Rahmen der Herstellung des Batteriegehäuses evakuiert, so dass es sich um eine leistungsfähige Vakuumisolierung handelt. Gemäß dem in Figur 1 dargestellten Ausschnitt in das Batteriegehäuse 1 schließt sich dann an die Innenwand 4 der Zellblock 5 eines in dem Batteriegehäuse 1 aufgenommenen Batteriemoduls an. Dabei können in dem Batteriegehäuse 1 durchaus mehrere miteinander verschaltete Zellblöcke bzw. Batteriemodule aufgenommen sein.

Figur 2 zeigt das in Figur 1 dargestellte Batteriegehäuse in einem Längsschnitt, aus dem deutlich wird, dass zwischen den einzelnen Zellblöcken 5 zusätzlich Kühlrippen 12 in das Batteriegehäuse 1 eingebracht sein können. Um die Kühlrippen 12 bzw. die insgesamt in dem Gehäuse 1 angeordneten Kühlelemente mit einer Kühlflüssigkeit zu versorgen, weist die Außenwand 2 eine vakuumdichte Durchführung zur Einleitung des Kühlmittels in das Batteriegehäuse 1 auf. Für den Fall, dass das Batteriegehäuse 1 in einem Fahrzeug angeordnet ist, kann das Kühlmittel aus der Kühlanlage des Fahrzeuges gespeist werden.

Figur 3 zeigt ein Detail des Aufbaus des Batteriegehäuses 1 in einer vergrößerten Ansicht. So ist zunächst auf der Innenseite der Gehäusewandung des Batteriegehäuses 1 ein Latent-Wärmespeicher 7 angeordnet. Ein solcher Latent-Wärmespeicher 7 besteht üblicherweise im Wesentlichen aus einem so genannten Phasenwechsel-Material (englisch: Phase Change Material, kurz: PCM), das die Eigenschaft hat, bei höheren Temperaturen Wärme aufzunehmen und diese bei Unterschreiten eines definierten Temperaturniveaus wiederum abzugeben. Dadurch, dass der Latent-Wärmespeicher 7 der Innenwand 4 des Batteriegehäuses 1 unmittelbar benachbart ist, kann somit die von den integrierten Batteriemodulen abgegebene Wärme unmittelbar von den Latent-Wärmespeichern 7 aufgenommen werden, bzw. die gegebenenfalls von den Latent-Wärmespeichern 7 abgegebene Wärme wird unmittelbar in den Innenraum des Batteriegehäuses 1 eingeleitet. Außerdem sind in den Zwischenraum zwischen der Außenwand 2 und der Innenwand 4, erneut unmittelbar der Innenwand 4 benachbart, einander parallel verlaufende Kühlkanäle 6 in die Wand des Batteriegehäuses 1 integriert. Auch hier ist sichergestellt, dass für den Fall, dass die Kühlkanäle 6 mit einer Kühlflüssigkeit durchströmt werden, eine unmittelbare Kühlung der in dem Batteriegehäuse 1 aufgenommenen Batteriemodule bewirkt wird.

Figur 4 zeigt schließlich die Fixierung eines Zellblocks 5 in dem Batteriegehäuse 1 in einer Detailansicht. Zunächst ist zur Fixierung des Zellblocks 5 an die Innenwand 4 eine in Richtung des Zellblocks 5 vorspringende Führungsschiene 8 angeformt. Dabei greift die Führungsschiene 8 in eine korrespondierende Ausnehmung 9 zur Ausbildung einer formschlüssigen Führung bzw. Verbindung zwischen dem Zellblock 5 und der Wandung des Batteriegehäuses 1 ein. Etwa durch Rüttel- oder Bremsbewegungen verursachte, auf das Batteriegehäuse einwirkende Kräfte werden gemäß der eingetragenen Kraftlinie 11 in die äußere Gehäusebefestigung 10 des Batteriegehäuses 2, etwa in das Chassis eines Fahrzeugs abgeleitet, so dass hierdurch eine sichere Fixierung der Zellblöcke 5 innerhalb des Batteriegehäuses 1 gewährleistet ist.

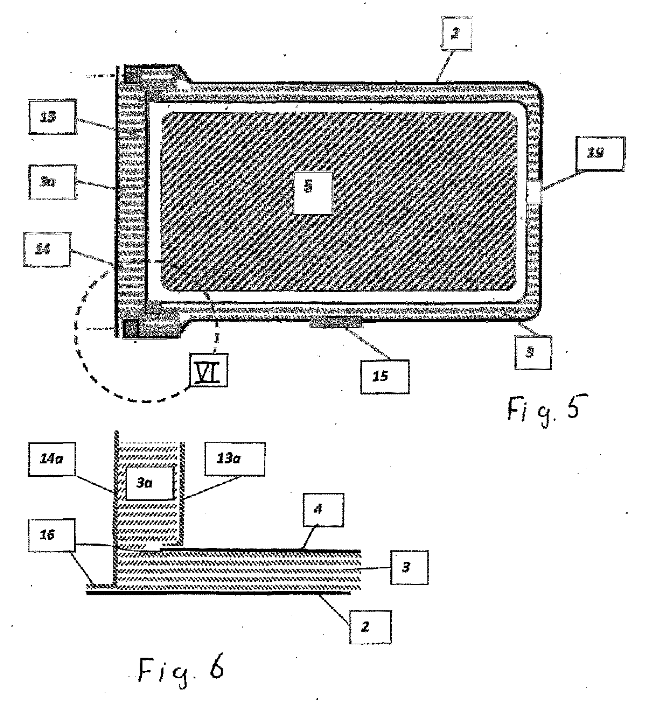

Figur 5 zeigt in einem Längsschnitt ein Batteriegehäuse 1, bei dem eine Wand gegebenenfalls für Wartungsarbeiten geöffnet werden kann, etwa um ein schadhaftes Batteriemodul bzw. einen schadhaften Zellblock 5 gegebenenfalls auswechseln zu können. Dabei wird dieses Gehäuse von einem mit dem Stützmaterial 3 gefüllten Deckelsegment 3a verschlossen. Inwändig wird das Deckelsegment 3a von einem Flanschdeckel 13 verschlossen. Außenseitig wird das Deckelsegment 3a von einem äußeren Flanschdeckel 14 verschlossen. Auch dieses Batteriegehäuse 1 ist mit einer vakuumdichten Durchführung 19 zur Ausleitung der elektrischen Energie oder Durchführung von Messleitungen versehen. Darüber hinaus ist die Wand des Batteriegehäuses 1 mit einem Vakuumport 15 versehen, um in Verbindung mit einer geeigneten Schleuseninstallation nach einer Öffnung des Deckelsegmentes 3a anschließend wieder eine Evakuierung des Batteriegehäuses 1 vornehmen zu können.

Gemäß der Detailansicht in Figur 6 ist die Verbindung zwischen den zu öffnenden Blechteilen bestimmungsgemäß jeweils durch eine Bördelnaht 16 verschlossen, die bedarfsweise geöffnet und wieder geschlossen werden kann.

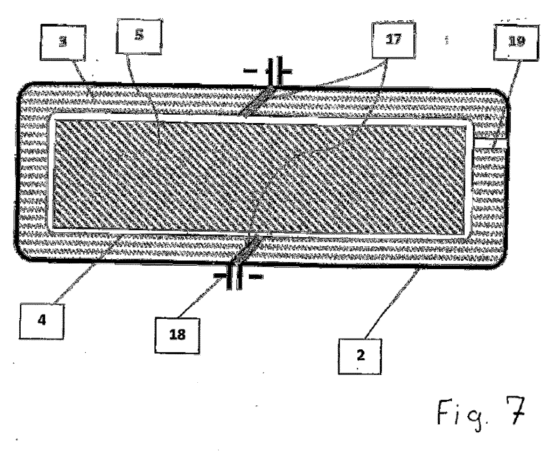

Figur 7 zeigt schließlich ein segmentiertes, die Zellblöcke 5 allseitig umschließendes Batteriegehäuse 1 in einem Längsschnitt. Dabei besteht dieses Batteriegehäuse 1 aus zwei zylinderförmigen Halbschalen, die im Bereich ihrer Stoßkanten durch eine umlaufende Fuge 17 miteinander verbunden sind und beispielsweise durch eine Schraubverbindung 18 kraftschlüssig miteinander verbunden sind. Dabei ist auch dieses Batteriegehäuse 1 mit einer vakuumdichten Durchführung 19 versehen.

### BEZUGSZEICHENLISTE

- 1: Batteriegehäuse
- 2: Außenwand
- 3: Stützmaterial
- 3a: Deckelsegment
- 4: Innenwand
- 5: Zellblock
- 6: Kühlkanal
- 7: Latent-Wärmespeicher
- 8: Führungsschiene
- 9: Ausnehmung
- 10: Gehäusebefestigung
- 11: Kraftlinie
- 12: Kühlrippen
- 13: Flanschdeckel
- 14: äußerer Flanschdeckel
- 15: Vakuumport
- 16: Bördelnaht
- 17: umlaufende Fuge
- 18: Verschraubung
- 19: Durchführung

## Patentansprüche

1. Batteriegehäuse zur Aufnahme eines oder mehrerer miteinander verschalteter Batteriemodule, vorzugsweise eines Fahrzeuges, wobei das Batteriegehäuse (1) als hochfestes und steifes Strukturelement ausgebildet ist und die Wandungselemente des Batteriegehäuses (1) jeweils doppelwandig, d.h. in einer Sandwich-Bauweise mit einer Innen- und einer beabstandet angeordneten Außenwand (4, 2), ausgebildet sind und jeweils dieser Zwischenraum zwischen dieser Innen- und Außenwand (4,2) jeweils mit einem porösen und gleichwohl crash-sicheren Stützmaterial (3) ausgefüllt und anschließend evakuiert ist und zusätzlich jeweils Kühlelemente in diesen Zwischenraum zwischen der Innen- und Außenwand (4, 2) integriert sind, wobei das Batteriegehäuse (1) reversibel vollständig gekapselt ist, d.h. im Wartungsfall einseitig zu öffnen, anschließend wieder verschließbar und erneut evakuierbar ist, wobei das Öffnen und Schließen eines Wandelementes des Batteriegehäuses (1) über zwei hintereinander angeordnete, elastomergedichtete Flansche oder Blindflansche, je einen für die Innen- und einen für die Außenwand (4 und 2), realisierbar ist, wobei die erneute Evakuierung des Batteriegehäuses (1) über einen in die Außenwand (2) eingeschweißten Vakuumport (15) in Verbindung mit einem geeigneten Schleusensystem durchführbar ist oder die Innen- und Außenwand (4 und 2) des Batteriegehäuses (1) über Bördelnähte (16) miteinander verbunden sind, wobei die Bördel so ausgebildet sind, dass dieser Verbindungsbereich mehrfach auftrenn- und wieder schließbar ist.

2. Batteriegehäuse nach Anspruch 1,
**dadurch gekennzeichnet, dass**
das Batteriegehäuse als hochfestes und steifes Srukturelement derart ausgebildet ist, dass etwa eingeleitete Beschleunigungs- und Gewichtskräfte auf der Innenseite des Batteriegehäuses in die Gehäusestruktur des Batteriegehäuses einleitbar und ohne zusätzliche Stütz- oder Tragelemente über die Wände des Batterigehäuses auf die entsprechenden Befestigungspunkte des Batteriegehäuses im Fahrzeug übertragbar sind.

3. Batteriegehäuse nach Anspruch 1 oder 2,
**dadurch gekennzeichnet, dass**
die Kühlelemente, etwa Kühlrippen (12), in der Innenwand (4) und/oder der Innenwand (4) benachbart in dem Zwischenraum zwischen der Innen- und Außenwand (4,2) angeordnet sind.

4. Batteriegehäuse nach Anspruch 1, 2 oder 3,
**dadurch gekennzeichnet, dass**
die Kühlelemente mit einem übergeordneten Kühlsystem, etwa dem eines Fahrzeuges, verbunden sind, wobei die hierzu erforderlichen Anschlüsse vakuumdicht bis zu den jeweiligen Kühlelementen in das Batteriegehäuse geführt sind.

5. Batteriegehäuse nach einem oder mehreren der vorhergehenden Ansprüche ,
**dadurch gekennzeichnet, dass**
in das poröse Stützmaterial (3) ein Hybridspeichermaterial oder ein beheizbarer Getter derart integriert ist, dass bei Überschreiten eines definierten Temperaturniveaus vorzugsweise Wasserstoff oder ein anderes geeignetes Gas in das Stützmaterial (3) emittiert wird und hierdurch die Wärmeleitfähigkeit des Stützmaterials (3) signifikant erhöht ist.

6. Batteriegehäuse nach einem oder mehreren der vorhergehenden Ansprüche,
**dadurch gekennzeichnet, dass**
in den Zwischenraum zwischen der Innen- und Außenwand (4,2) des Batteriegehäuses (1) Latent-Wärmespeicherelemente (7) integriert sind und/oder Latent-Wärmespeicherelemente (7), vorzugsweise als mikrogekapselte Elemente, in die Kühlflüssigkeit der Kühlelemente (6, 12) integriert sind.

7. Batteriegehäuse nach Anspruch 6,
**dadurch gekennzeichnet, dass**
die Latent-Wärmespeicherelemente (7) mit Phasenwechselmaterialien gefüllt sind oder insgesamt aus einem derartigen Material bestehen.

8. Batteriegehäuse nach Anspruch 6 oder 7,
**dadurch gekennzeichnet, dass**
die Materialeigenschaften der Latent-Wärmespeicher (7) derart ausgewählt sind, dass diese bei Überschreiten eines definierten Temperaturniveaus selbsttätig Wärme speichern und bei Unterschreiten eines anderen definierten, niedrigeren Temperaturniveaus selbsttätig Wärme abgeben.

9. Batteriegehäuse nach einem oder mehreren der vorhergehenden Ansprüche 6 bis 8,
**dadurch gekennzeichnet, dass**
das Batteriegehäuse (1) mit einer Steuerung und/oder Regelung zur Realisierung eines Thermomanagements hinsichtlich der Innentemperatur des Gehäuses derart versehen ist, dass bei Wärmeabgabe aus den Latent-Wärmespeichern (7) die Kühlung der integrierten Kühlelemente (6, 12) abgeschaltet ist.

10. Batteriegehäuse nach Anspruch 9,
**dadurch gekennzeichnet, dass**
mittels der Steuerung und/oder Regelung die Wärmedämmung des Batteriegehäuses (1) über eine gesteuerte und/oder geregelte Erwärmung des in das Stützmaterial (3) des Zwischenraums zwischen der Innen- und Außenwand (4 und 2) integrierten Hybridspeichermaterials oder Getters steuer-und/ oder regelbar ist

11. Batteriegehäuse nach Anspruch 9 oder 10,
**dadurch gekennzeichnet, dass**
die Steuerung und/oder Regelung mit einer Sensorik zur Erfassung der jeweiligen Fahrzustände eines Fahrzeugs, insbesondere der aktuellen Motorleistung und/oder des aktuellen Energiebedarfs des Fahrzeugs verbunden ist und somit das Thermomanagement in Abhängigkeit von der aktuellen Batterie- und/oder Fahrzeugsituation gesteuert und/oder geregelt ist.

12. Batteriegehäuse nach einem oder mehreren der vorhergehenden Ansprüche,
**dadurch gekennzeichnet, dass**
das Batteriegehäuse (1) vollständig gekapselt ausgebildet ist.

13. Batteriegehäuse nach einem oder mehreren der vorhergehenden Ansprüche,
**dadurch gekennzeichnet, dass**
das Batteriegehäuse (1) zweiteilig, d.h. in Form zweier separater Halbschalen, ausgebildet ist, die beidseitig über das oder die miteinander verschalteten Batteriemodule derart schiebbar sind, dass sich die umlaufenden Stoßkanten (17) zwischen den Halbschalen, vorzugsweise unter Zwischenlage eines Dichtungselements, zu einem geschlossenen Batteriegehäuse (1) fügen und anschließend mittels geeigneter Verbindungselemente, etwa Klammern oder Spannbändern, kraftschlüssig miteinander verbunden sind.

14. Batteriegehäuse nach einem oder mehreren der vorhergehenden Ansprüche 1 bis 13,
**dadurch gekennzeichnet, dass**
das Batteriegehäuse (1) aus mehreren zylinderförmigen Halbschalen modulweise zusammensteckbar ist und beidseitig von nur einseitig geöffneten Halbschalen abgeschlossen wird, wobei die jeweils aneinander angrenzenden Halbschalen derart miteinander verbindbar sind, dass sich die umlaufenden Fugen (17) zwischen den an der Verbindung beteiligten Halbschalen, vorzugsweise unter Zwischenlage einer Dichtung, fügen und anschließend mittels geeigneter Verbindungselemente, etwa Klammern oder Spannbändern, kraftschlüssig miteinander verbindbar sind.

15. Batteriegehäuse nach einem oder mehreren der vorhergehenden Ansprüche ,
**dadurch gekennzeichnet, dass**
die in die Wandelemente integrierten Kühlelemente (6, 12) beim Zusammenfügen der Halbschalen über in die Stoßfugen (17) der Halbschalen integrierte Steckkupplungen miteinander verbindbar sind.

16. Batteriegehäuse nach einem oder mehreren der Ansprüche 1 bis 13,
**dadurch gekennzeichnet, dass**
das Batteriegehäuse (1) oder die einzelnen Halbschalen über einen Vakuumport (15) i.V.m. einem geeigneten Schleusensystem oder über einen Rohrstutzen, der nach der Evakuierung mittels eines Pinchverschlusses verschließbar ist, oder über gesonderte Evakuierungsöffnungen der Halbschalenelemente, die nach der Evakuierung mittels verlöteter Blechdeckel verschließbar sind, jeweils evakuierbar sind.

17. Batteriegehäuse nach einem oder mehreren der vorhergehenden Ansprüche,
**dadurch gekennzeichnet, dass**
elektrische Zuleitungen, Messleitungen die Kühlflüssigkeitszufuhr mittels dünnwandiger Röhren oder Wellbälge (19) vakuumdicht in das Batteriegehäuse (1) geführt sind.

## Claims

1. A battery casing for accommodating one or several interconnected battery modules, preferably of a vehicle, wherein the battery casing (1) is formed as a high-strength and rigid structural element and the wall elements of the battery casing (1) are each formed with a double wall, i.e. in sandwich design, with an inner wall and an outer wall (4, 2) spaced therefrom, and said intermediate space between said inner and outer wall (4, 2) is respectively filled with a porous and simultaneously crash-resistant support material (3) and is subsequently evacuated, and in addition respective cooling elements are integrated in said intermediate space between the inner and outer wall (4, 2), wherein the battery casing (1) is reversibly fully encapsulated, i.e. it is opened on one side in case of maintenance and it can subsequently be closed and evacuated again, wherein the opening and closing of a wall element of the battery casing (1) can be realised via two elastomer-sealed flanges or blind flanges which are arranged one behind the other, one each for the inner wall and one for the outer wall (4 and 2), wherein the renewed evacuation of the battery casing (1) can be carried out via a vacuum port (15) welded into the outer wall (2) in conjunction with a suitable transfer port system, or the inner and outer wall (4 and 2) of the battery casing (1) are connected to each other via beadings (16), wherein the beads are formed in such a way that said connecting region can be separated and closed again several times.

2. A battery casing according to claim 1, **characterized in that** the battery casing is formed as a high-strength and rigid structural element in such a way that optionally introduced acceleration and weight forces can be introduced on the inside of the battery casing into the casing structure of the battery casing and can be transferred without any additional support or carrying elements via the walls of the battery casing to the respective fastening points of the battery casing in the vehicle.

3. A battery casing according to claim 1 or 2, **characterized in that** the cooling elements, e.g. the cooling ribs (12), are arranged in the inner wall (4) and/or adjacent to the inner wall (4) in the intermediate space between the inner and the outer wall (4, 2).

4. A battery casing according to claim 1, 2 or 3, **characterized in that** the cooling elements are connected to a higher level cooling system, e.g. that of a vehicle for example, wherein the required connections are guided in a vacuum-tight manner into the battery casing, up to the respective cooling elements.

5. A battery casing according to one or several of the preceding claims, **characterized in that** a hybrid storage material or a heatable getter are integrated in the porous support material (3) in such a manner that if a defined temperature level is exceeded, preferably hydrogen or another gas is emitted into the support material (3), thus significantly increasing heat conductivity of the support material (3).

6. A battery casing according to one or several of the preceding claims, **characterized in that** latent heat storage elements (7) are integrated into the intermediate space between the inner and outer wall (4, 2) of the battery casing (1), and/or latent heat storage elements (7), preferably formed as micro-encapsulated elements, are integrated in the cooling fluid of the cooling elements (6, 12).

7. A battery casing according to claim 6, **characterized in that** the latent heat storage elements (7) are filled with phase change materials or consist entirely of such a material.

8. A battery casing according to claim 6 or 7, **characterized in that** the material properties of the latent heat storage elements (7) are selected in such a way that when a defined temperature level is exceeded said latent heat storage elements automatically store heat, and when the temperature drops below a second defined, lower temperature level said latent heat storage elements automatically emit heat.

9. A battery casing according to one or several of the preceding claims 6 to 8, **characterized in that** the battery casing (1) is provided with a controller and/or feedback controller for realising thermal management concerning the inner temperature of the housing in such a way that cooling of the integrated cooling elements (6, 12) is deactivated when heat is emitted from the latent heat storage elements (7).

10. A battery casing according to claim 9, **characterized in that** the heat insulation of the battery casing (1) can be controlled and/or adjusted by means of the controller and/or feedback controller via a controlled and/or adjusted heating of the hybrid storage material or getter integrated in the support material (3) of the intermediate space between the inner and outer wall (4 and 2).

11. A battery casing according to claim 9 or 10, **characterized in that** the controller and/or feedback controller is connected to a sensor system for detecting the respective driving states of a vehicle, especially the current engine power and/or the current power requirement of the vehicle, and the thermal management is thus controlled and/or adjusted depending on the current battery and/or vehicle situation.

12. A battery casing according to one or several of the preceding claims, **characterized in that** the battery casing (1) is formed in a completely encapsulated way.

13. A battery casing according to one or several of the preceding claims, **characterized in that** the battery casing (1) is formed in two parts, i.e. in form of two separate half-shells, which can be pushed on both sides over the battery module or the mutually switched battery modules in such a way that the circumferential abutting edges (17) between the half-shells, preferably by interposing a sealing element, are joined into an enclosed battery casing (1) and are subsequently connected to each other in a force-locked manner by means of suitable connecting elements such as clamps or tightening straps.

14. A battery casing according to one or several of the claims 1 to 13, **characterized in that** the battery casing (1) can be assembled from several cylindrical half-shells in the manner of a module, and is terminated on both sides by half-shells which are only open on one side, wherein the mutually adjoining half-shells can be connected to each other in such a way that the circumferential gaps (17) between the half-shells involved in the connection are joined, preferably by interposing a seal, and can subsequently be connected in a force-locked manner to each other by means of suitable connecting elements such as clamps or tightening straps.

15. A battery casing according to one or several of the preceding claims, **characterized in that** the cooling elements (6, 12) integrated in the wall elements can be connected to each other during assembly of the half-shells via plug-in couplings integrated in butt joints (17) of the half-shells.

16. A battery casing according to one or several of the claims 1 to 13, **characterized in that** the battery casing (1) or the individual half-shells can each be evacuated via a vacuum port (15) in conjunction with a suitable transfer port system or via a pipe socket which can be sealed by means of a pinch closure after evacuation, or via separate evacuation openings of the half-shell elements which can be sealed after evacuation by means of soldered sheet-metal lids.

17. A battery casing according to one or several of the preceding claims, **characterized in that** the electrical supply lines, measurement lines, and a cooling fluid supply are guided by means of thin-walled pipes or corrugated bellows (19) in a vacuum-tight manner into the battery casing (1).

## Revendications

1. Boîtier de batterie destiné à recevoir un ou plusieurs modules de batterie connectés entre eux, de préférence dans un véhicule, le boîtier de batterie (1) étant conçu comme un élément structurel très solide et rigide et les éléments de paroi du boîtier de batterie (1) étant chacun construit avec une double paroi, c'est-à-dire en construction sandwich avec une paroi intérieure et une paroi extérieure (4, 2) disposées à distance l'une de l'autre, cet espace intermédiaire entre les parois intérieure et extérieure (4, 2) étant rempli d'un matériau de soutien (3) poreux et en même temps résistant aux collisions, après quoi le vide y est créé, et des éléments de refroidissement étant en outre intégrés dans cet espace intermédiaire entre les parois intérieure et extérieure (4, 2), le boîtier de batterie (1) étant entièrement encapsulé de façon réversible, c'est-à-dire avec la possibilité de l'ouvrir sur un côté pour l'entretien, puis de le refermer et d'y refaire le vide, l'ouverture et la fermeture d'un élément de paroi du boîtier de batterie (1) pouvant être réalisée à l'aide de deux brides ou brides d'obturation disposées l'une derrière l'autre et rendues étanches avec un élastomère, une pour la paroi intérieure et une pour la paroi extérieure (4 et 2), le vide pouvant être rétabli dans le boîtier de batterie (1) à l'aide d'un orifice d'évacuation (15) soudé dans la paroi extérieure (2) et communiquant avec un système de sas approprié, ou bien les parois intérieure et extérieure (4 et 2) du boîtier de batterie (1) étant reliées entre elles par des joints à bords relevés (16), le bord relevé étant conformé de telle façon que cette zone d'assemblage puisse être ouverte et refermée plusieurs fois.

2. Boîtier de batterie selon la revendication 1, **caractérisé en ce qu'**il est conformé comme un élément structurel très solide et rigide, de telle façon que des forces d'accélération et de poids éventuellement exercées puisent être transmises à l'intérieur du boîtier de batterie dans sa structure de boîtier et transmises sans éléments de support ou d'appui supplémentaires, par l'intermédiaire des parois du boîtier de batterie, aux points de fixation correspondants du boîtier de batterie dans le véhicule.

3. Boîtier de batterie selon la revendication 1 ou 2, **caractérisé en ce que** les éléments de refroidissement, par exemple des ailettes de refroidissement (12), sont disposés dans la paroi intérieure (4) et/ou au voisinage de paroi intérieure (4) dans l'espace intermédiaire entre les parois intérieure et extérieure (4, 2).

4. Boîtier de batterie selon la revendication 1, 2 ou 3, **caractérisé en ce que** les éléments de refroidissement sont reliés à un système de refroidissement de niveau supérieur, par exemple celui de leur véhicule, les raccords nécessaires pour cela étant amenés de façon étanche au vide jusqu'aux éléments de refroidissement correspondants dans le boîtier de batterie.

5. Boîtier de batterie selon une ou plusieurs des revendications précédentes, **caractérisé en ce qu'**un matériau accumulateur hybride ou un dégazeur pouvant être chauffé est intégré dans le matériau de soutien poreux (3) de telle manière que si une température définie est dépassée, de l'hydrogène, de préférence, ou un autre gaz approprié soit émis dans le matériau de soutien (3) et la conductibilité thermique du matériau de soutien (3) soit ainsi significativement augmentée.

6. Boîtier de batterie selon une ou plusieurs des revendications précédentes, **caractérisé en ce que** des éléments accumulateurs de chaleur latente (7) sont intégrés dans l'espace intermédiaire entre les parois intérieure et extérieure (4, 2) du boîtier de batterie (1) et/ou les éléments accumulateurs de chaleur latente (7) sont intégrés, de préférence sous forme d'éléments en microcapsules, dans le liquide de refroidissement des éléments de refroidissement (6, 12).

7. Boîtier de batterie selon la revendication 6, **caractérisé en ce que** les éléments accumulateurs de chaleur latente (7) sont remplis de matériaux à changement de phase ou se composent entièrement d'un tel matériau.

8. Boîtier de batterie selon la revendication 6 ou 7, **caractérisé en ce que** les propriétés de matériau des accumulateurs de chaleur latente (7) sont choisies de telle façon que si un niveau de température défini est dépassé, ils accumulent d'eux-mêmes de la chaleur, et si la température passe en-dessous d'un autre niveau défini plus bas, ils libèrent d'eux-mêmes de la chaleur.

9. Boîtier de batterie selon une ou plusieurs des revendications 6 à 8, **caractérisé en ce que** le boîtier de batterie (1) est muni d'une commande et/ou d'une régulation pour réaliser une gestion thermique de la température interne du boîtier, de telle façon que le refroidissement des éléments de refroidissement intégrés (6, 12) soit arrêté si de la chaleur est libérée par les accumulateurs de chaleur latente (7).

10. Boîtier de batterie selon la revendication 9, **caractérisé en ce que** la commande et/ou la régulation peuvent contrôler et/ou réguler l'isolation thermique du boîtier de batterie (1) par un chauffage contrôlée et/ou régulé du matériau accumulateur hybride ou du dégazeur intégré dans le matériau de soutien (3) de l'espace intermédiaire entre les parois intérieure et extérieure (4 et 2).

11. Boîtier de batterie selon la revendication 9 ou 10, **caractérisé en ce que** la commande et/ou la régulation sont reliées à des capteurs pour détecter des états de conduite correspondants d'un véhicule, en particulier le rendement actuel du moteur et/ou la demande d'énergie actuelle du véhicule et la gestion thermique est ainsi contrôlée et/ou régulée en fonction de la situation actuelle de la batterie et/ou du véhicule.

12. Boîtier de batterie selon une ou plusieurs des revendications précédentes, **caractérisé en ce que** le boîtier de batterie (1) est entièrement encapsulé.

13. Boîtier de batterie selon une ou plusieurs des revendications précédentes, **caractérisé en ce que** le boîtier de batterie (1) est conçu en deux parties, c'est-à-dire sous la forme de deux demi-coques séparées qui peuvent être glissées de part et d'autre par-dessus le module ou les modules de batterie connectés entre eux, de telle façon que les bords d'assemblage (17) circonférentiels s'assemblent entre eux entre les demi-coques, de préférence en intercalant un élément d'étanchéité, pour former un boîtier de batterie (1) fermé, puis sont reliés entre eux par friction au moyen d'éléments d'assemblage appropriés tels que des agrafes ou des sangles avec tendeurs.

14. Boîtier de batterie selon une ou plusieurs des revendications 1 à 13, **caractérisé en ce que** le boîtier de batterie (1) se compose de plusieurs demi-coques cylindriques, emboîtables les unes dans les autres de façon modulaire, et est fermé des deux côtés par des demi-coques ouvertes d'un seul côté, les demi-coques contiguës pouvant être assemblées entre elles de telle façon que les joints circonférentiels (17) entre les demi-coques participant à l'assemblage s'assemblent entre eux, de préférence en intercalant un joint d'étanchéité, puis sont reliés entre eux par friction au moyen d'éléments d'assemblage appropriés tels que des agrafes ou des sangles avec tendeurs.

15. Boîtier de batterie selon une ou plusieurs des revendications précédentes, **caractérisé en ce que** les éléments de refroidissement (6, 12) intégrés dans les éléments de paroi peuvent être reliés entre eux lors de l'assemblage des demi-coques à l'aide de fiches de couplage intégrées dans les joints d'assemblage (17) des demi-coques.

16. Boîtier de batterie selon une ou plusieurs des revendications 1 à 13, **caractérisé en ce que** le vide peut être créé dans le boîtier de batterie (1) ou dans les différentes demi-coques par un orifice d'évacuation (15) associé à un système approprié de sas ou par un piquage de tuyau qui peut être obturé par une fermeture par rétreint quand le vide est établi, ou par des ouvertures d'évacuation séparées des éléments de demi-coque, qui peuvent être fermées au moyen de couvercles en tôle brasés quand le vide est établi.

17. Boîtier de batterie selon une ou plusieurs des revendications précédentes, **caractérisé en ce que** des lignes d'arrivée électriques, des lignes de mesure et l'arrivée de liquide de refroidissement sont amenées dans le boîtier de batterie (1) de manière étanche au vide au moyen de tuyaux à paroi mince ou de soufflets (19).
